(19)

Europäisches
Patentamt
European
Patent Office
Office européen
des brevets

(11) **EP 2 574 649 A2**

(12) **EUROPEAN PATENT APPLICATION**

(43) Date of publication:
**03.04.2013 Bulletin 2013/14**

(51) Int Cl.:
*C09J 7/04* *(2006.01)*    *D21H 25/00* *(2006.01)*

(21) Application number: **12163935.5**

(22) Date of filing: **28.01.2010**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **30.01.2009 CA 2652063**

(62) Document number(s) of the earlier application(s) in
accordance with Art. 76 EPC:
**10736370.7 / 2 391 688**

(27) Previously filed application:
**28.01.2010 PCT/US0202/309**

(71) Applicant: **3M Innovative Properties Company
Saint Paul, MN 55133-3427 (US)**

(72) Inventors:
• **Van Doorse-Laer, Robert L.**
  **London, Ontario N5V 3R6 (CA)**
• **Pucula, George, R.**
  **London, Ontario N5V 3R6 (CA)**
• **Grenon, Anne-Louise, L.**
  **London, Ontario N5V 3R6 (CA)**

(74) Representative: **Isarpatent
Patent- und Rechtsanwälte
Friedrichstrasse 31
80801 München (DE)**

Remarks:
This application was filed on 12-04-2012 as a
divisional application to the application mentioned
under INID code 62.

(54) **Tape comprising recycled paper**

(57) A masking tape having a crepe paper backing
comprising recycled post-consumer waste (PCW) paper.
The paper backing comprises at least about 30 wt% PCW
paper and retains the desirable resistance to slivering of
non-PCW containing masking tapes through selection of
an increased dry saturant loading rate of at least 40 wt%.
This results in cross-directional (CD) tar values of at least
40 grams-force (gf).

EP 2 574 649 A2

## Description

Field of the Invention

The invention relates to pressure sensitive adhesive tapes that are made using a crepe paper backing, for example masking tape. In particular, the invention relates to such tapes that comprise recycled post-consumer waste (PCW) paper as a component of the crepe paper backing while still retaining desirable physical properties.

Background of the Invention

Paper backings are conventionally used in many pressure sensitive adhesive tapes. The paper may be impregnated with a material which is capable of binding the paper fibers together to increase the strength of the paper, thereby reducing the tendency of the tape to split or delaminate. A pressure sensitive adhesive is typically applied to one side of the paper sheet while a release coating is typically applied to the opposite side. A barrier layer may be applied to one side of the paper as a base for the release coating, and a primer may optionally be applied to the other side of the paper to help adhere the adhesive. The coated sheet is then wound and cut into rolls to form an adhesive tape.

In many applications, it is important that the tape be extensible and conformable with minimum tape stiffness. For example, a tape used to mask curved and irregularly shaped surfaces preferably conforms closely to such surfaces without tearing. In addition to being extensible and conformable, it is preferable that such tapes have relatively smooth surfaces so as to minimize the amount of adhesive and release coating required to cover the surfaces, and to minimize seepage (for example, of paint) under the edge of the masking tape. It is also desirable that the tape be as thin as possible to provide an improved paint edge.

Extensibility and conformability in tapes have traditionally been achieved by mechanically creping the paper used in the tape backing using a creping blade to impart ridges to the paper web either before or after saturant is applied. See, for example, U.S. Pat. No. 2,214,006 (Ziegler). The degree of extensibility can be further controlled by adding a rubber-resin saturant to bind the fibers of the creped backing. See, for example, U.S. Pat. No. 2,410,078 (Kellgren).

When masking tape is removed from surfaces following painting, it is desirable that the number of edge tears (also known as "slivering") is minimal to simplify rapid removal of the tape. The rate of slivering is known to correlate with the cross-directional (CD) tear strength of the paper backing, with higher CD tear values leading to reduced slivering rates.

In addition, it is important that the crepe paper backing used for masking tape is able to be run on production equipment to enable volume manufacturing. The physical property requirements of the production equipment at the paper supplier as well as at the tape manufacturing facility must be taken into account. For example, insufficient machine directional (MD) tear strength or cross-directional (CD) tear strength leads to tearing of the paper and jamming of the equipment. It is therefore important that the equipment requirements are considered when making changes that could affect physical properties of the paper.

Paper products incorporating a certain content of recycled paper material are desirable from an environmental point-of-view and are in demand by consumers. It would therefore be desirable to make a masking tape composition comprising a certain percentage of recycled post-consumer waste (PCW) pulp in the crepe paper backing. In order to be labeled as a recycled paper product, generally a recycled fiber content of at least 30% is needed. To enhance the eco-friendly appeal of the product, it would be further desirable to reduce or eliminate the use of chemicals in the product, particularly the use of solvent based saturants.

Historically, the crepe paper used to manufacture masking tape has been made from virgin bleached, semi-bleached and unbleached pulps with strict standards on the paper properties. Even the tree species and geographical source of pulp used to make the paper has been a closely held secret, since pulp from different sources leads to significant differences in processability and physical properties. It is therefore believed in the industry that incorporating any amount of PCW pulp into crepe paper for tape backings would be detrimental to final product properties. It is unclear whether a crepe paper containing PCW would have the required physical properties, such as MD and CD tear strength, saturant uptake, elongation, etc. Hence, there are no commercially available tape products comprising PCW containing crepe paper.

There is therefore a need for improved masking tape compositions comprising recycled PCW pulp in the crepe paper backing that retain the properties desired by consumers, particularly a low incidence of edge tears, and the properties required for volume manufacturing.

Summary of the Invention

According to the present invention, there is provided a masking tape composition comprising: a crepe paper comprising post-consumer waste (PCW) pulp in an amount of at least about 30 wt% based on the dry weight of the paper; a polymer saturant suitable for use in masking tapes absorbed into the paper to form a saturated paper having a dry saturant loading amount of at least 40 wt% based on the dry weight of the paper, the saturated paper having a cross directional (CD) tear value of at least 40 gf; an adhesive on a first side of the saturated paper; and, a release agent on a second side of the saturated paper opposite the first side.

According to another aspect of the present invention, there is provided a masking tape composition comprising: a crepe paper comprising post-consumer waste (PCW) pulp in an amount of about 30-50 wt% based on the dry weight of the paper; and, a polymer saturant absorbed into the paper to form a saturated paper having a dry saturant loading amount of 40 to 60 wt% based on the dry weight of the paper; an adhesive on a first side of the saturated paper; and, a release agent on a second side of the saturated paper opposite the first side.

The masking tape composition of the invention may be prepared by coating an adhesive onto at least a portion of one major surface of the crepe paper backing following saturation. A primer may optionally be applied to the backing to help adhere the adhesive to the backing. When the adhesive is coated on only one side of the backing, a release coating may optionally be used on the backing opposite the adhesive so that the sheet can be dispensed in roll form. A barrier layer may also be applied to the backing as a base for the release coating. A release liner may also optionally be included to protect the adhesive surface. The masking tape is preferably made using production equipment for volume manufacturing.

According to yet another aspect of the present invention, there is provided a method of masking a workpiece surface to facilitate painting a first area of the surface. This method includes applying the masking tape of the invention to a second area of the surface. The method desirably results in a reduced number of edge tears of the tape composition upon removal from the surface following painting as compared with an otherwise identical tape composition, particularly as it relates to PCW content of the paper, having a different dry saturant loading.

The invention advantageously provides for a masking tape composition that incorporates at least about 30% PCW pulp into the crepe paper backing while retaining desired physical properties, particularly CD tear and incidence of edge tears.

Brief Description of the Drawings

Having summarized the invention, preferred embodiments thereof will now be described with reference to the accompanying figures, in which:

Fig. 1 provides a comparison of various quality control parameters for 30 wt% PCW containing paper in comparison with a non-PCW containing control;

Fig. 2a shows the results of 3 day adhesion to glass testing for tapes comprising 30 wt% PCW papers at two different saturant loadings as compared with a non-PCW containing control;

Fig. 2b shows the results of 3 day unwinding testing for the tapes shown in Fig. 2a;

Fig. 2c shows the results of tensile testing for the tapes shown in Fig. 2a;

Fig. 2d shows the results of elongation testing for the tapes shown in Fig. 2a;

Fig. 3 shows the number of edge tears, using the described slivering test, for paper lots having different saturant loadings; and,

Fig. 4 shows a plot of CD Tear in grams force (gf) versus Paper Type, with error bars showing the 95% Confidence Interval (CI) about the mean.

Detailed Description

Preferably, the paper used in the crepe paper backing has a dry basis weight of from 35 to 60 g/m2 (or gsm), more preferably from 42 to 50 g/m2, for example about 42, 45 or 50 g/m2. The paper may consist essentially of cellulosic fibers. Alternatively, it may contain other fibers, fillers, colorants and the like, such as are known in the art. The paper may have an elongation at break of from 4 to 20%, preferably from 5 to 18%, more preferably from 6 to 14%. The thickness of the paper may be from 3 to 7 mil (0.08 to 0.18 mm).

The crepe paper incorporates at least about 30% by weight, based on dry weight of the paper, of a post-consumer waste (PCW) pulp suitable for use in the making of crepe paper. The PCW pulp is bleached or semi-bleached. Paper made with 30% PCW preferably has the following typical properties: 45 gsm nominal basis weight; caliper target 4.1 mils; 1ply 100 cc porosity target of 1.25 seconds; MD tensile target of 14.5 lb/in; MD elongation target of 11%; MD wet tensile target of 3.1 lb/in; and, CD tensile of 6.4 lb/in. From a paper manufacturing perspective, increasing the amount of PCW pulp in the paper eventually leads to detrimental physical properties that reduce the speed at which the paper can be produced on production equipment. Accordingly, it has been found that crepe papers suitable for volume manufacturing preferably incorporate up to about 50% by weight, based on dry weight of the paper, of the post-consumer waste (PCW) pulp. It will be understood by persons skilled in the art that the nature of recycled material makes it difficult to accurately and consistently characterize; in this context, the term "about" is therefore meant to include an acceptable range of manufacturing and measurement tolerance for PCW containing materials, for example +/- 2-3 % by weight, based on dry weight of the paper.

A polymer saturant is absorbed into or impregnated into the crepe paper backing during production. The saturant preferably has a glass transition temperature, Tg, below about 10 °C and more preferably below about 0 °C. Suitable saturants include for example, synthetic or natural isoprene, styrene-butadiene rubber (SBR), acrylonitrile-butadiene rubber, acrylonitrile-butadiene-styrene rubber, crude rubber, acrylates, plasticized elastomers, or combinations of elastomers which provide suitable fiber slippage. To enhance the eco-friendly aspects of the tape composition, it is preferable to use a water-based saturant, rather than a solvent based saturant. Latex rubber saturants are an example of a class of water-based saturants. A preferred saturant is a latex SBR saturant.

The saturant is provided in an amount suitable for reducing the difference in CD tear strength between PCW containing crepe paper and conventional crepe paper to an amount whereby no significant difference in slivering is observed. It is preferable from an economic point of view to reduce saturant loading to a minimum value in order to save cost. In addition, the choice of saturant, whether solvent based or water based, has an impact on required saturant loading as well as cost. In volume production, economic saturant loadings for water based saturants are typically less than 60 % based on dry weight of paper.

However, in the present invention, it has been surprisingly found that saturant loadings, at least for water-based saturants, above a certain minimum value have an important impact on the desired physical properties, particularly CD tear strength, of the paper. Accordingly, in connection with the present invention, a preferred saturant loading of at least 40 wt% based on dry weight of paper is used, more preferably at least 46 wt% based on dry weight of paper. Although saturant loadings of up to 60 wt% based on dry weight of paper may be used, preferred ranges are from 40 to 60 wt% based on the weight of the dry paper, more preferably from 46 to 52 wt% based on the weight of the dry paper.

From a consumer perspective, it is desirable that tape compositions have minimal edge tear after adhesion to a wallboard surface. The incidence of edge tears correlates with the CD tear strength of the saturated paper. It has been found experimentally that saturated PCW containing papers having a CD tear strength of at least 40 grams-force (gf), preferrably at least 44 gf, are suitable for obtaining the desired edge tear performance. This result is surprising, in that the CD tear strength of saturated conventional (non-PCW containing) crepe papers that achieve the same slivering performance is higher, on a statistically significant basis, than the saturated PCW papers. Accordingly, comparable slivering performance can be achieved with saturated PCW containing paper at lower CD tear strength than for conventional paper.

Adhesives useful in the preparation of the tape and assembly of the present invention include pressure-sensitive and non-pressure sensitive adhesives, including solvent, heat, or radiation activated systems. Pressure sensitive adhesives (PSAs) are a preferred class of adhesives for use in the invention. PSAs are normally tacky at room temperature and can be adhered to a surface by the application of, at most, light finger pressure.

Useful adhesives may be based on compositions of polyacrylate; polyvinyl ether; diene-containing rubber (such as natural rubber, polyisoprene, and polyisobutylene); polychloroprene; butyl rubber; butadiene-acrylonitrile polymer; thermoplastic elastomer; block copolymers (such as the styrene-isoprene and styrene-isoprene-styrene block copolymers, ethylene-propylene-diene polymers, and styrene-butadiene polymer); poly-alpha-olefin; amorphous polyolefin; silicone; ethylene-containing copolymer (such as ethylene vinyl acetate, ethyl ethylacrylate, and ethyl methacrylate); polyurethane; polyamide; epoxy; polyvinylpyrrolidone and vinylpyrrolidone copolymers; polyesters; and mixtures of the above. A general description of useful pressure-sensitive adhesives may be found in Encyclopedia of Polymer Science and Engineering, Vol. 13, Wiley-Interscience Publishers (New York, 1988). Additional description of useful pressure sensitive adhesives may be found in Encyclopedia of Polymer Science and Technology, Vol. 1, Interscience Publishers (New York, 1964).

PSA compositions that are particularly suitable for the tape composition of this invention comprise an elastomeric component and a tackifier resin component, wherein the tackifier component is present in an amount of from about 20 to about 300 parts by weight, preferably about 50 to about 150 parts by weight, per 100 parts by weight of the elastomeric component. Preferred PSAs include, but are not limited to, acrylate or rubber resin elastomeric components, including both natural rubber and styrene-butadiene rubber (SBR), or mixtures of the same.

To form the tape composition and assembly of the present invention, the adhesive can be applied to a first side of the backing paper by any method which results in transfer of the adhesive to, and retention thereof by, the backing. For example, the adhesive can be applied to the paper backing by solvent coating, emulsion coating out of water, hot melt coating, or any other suitable coating method. The adhesives may also be cured by any conventional method, including, for example, heat, e-beam or ultraviolet (uv) curing.

A release agent may optionally be used on a second side of the backing paper opposite the adhesive so that the tape composition can be dispensed in roll form. The release agent or release coating provides a surface which is not strongly adhered to by the pressure sensitive adhesive. Conventional pressure sensitive adhesive release coatings are based on long chain alkyl groups such as octadecyl isocyanate or octadecyl acrylate. Other release coatings comprise fluorocarbon, organo-silicone, silicone, polyvinyl chloride, polyamide or melamine materials. Release coatings are typically applied in the weight range of 0.01 to 2.0 grams per square meter of backing.

A barrier layer may be applied before applying the release coating. The barrier layer preferably imparts some solvent resistance to the coated backing. The barrier layer may comprise an elastomer having a glass transition temperature (Tg) from -5 °C to 75 °C. Useful barrier layers include those that are based on acrylates, polyesters, styrene butadienes, styrene butadiene-acrylonitriles, melamines, polyamides or urea formaldehyde resins. The barrier layer is typically applied in the weight range of 2 to 10 grams per square meter of backing. Alternatively, a thermoplastic layer may be employed as a barrier layer. Representative examples of these materials include polyamide (such as nylon), and polyolefins (such as polypropylene, polyethylene, polybutylene, polybutadiene, poly-4-methylpentene and other polyolefins), polystyrene, polyester, copolyester, polyvinyl chloride, polyvinyl acetate, copolymers (such as ethylene/ propylene copolymer, propylene/butylene copolymer, ethylene/propylene/butylene copolymer, ethylene/vinyl acetate copolymer, and ethylene/butyl acrylate copolymer), polymethyl methacrylate, thermoplastic rubber block copolymer, and blends and mixtures thereof.

A primer coating may be applied to the backing paper before applying the adhesive. Primer compositions may comprise natural rubber, SBR or neoprene rubbers, or mixtures thereof, blended with resins which are reactive and/or unreactive and filler. The primer coating is typically applied in the weight range of 2 to 8 grams per square meter of backing.

The thickness of the finished tape composition may range from 0.01 to 1 mm, from 0.05 to 0.5 mm, or from 0.10 to 0.20 mm. Such a thin sheet provides an improved paint edge in masking applications.

Masking tape compositions according to the present invention may be provided on rolls or as adhesive sheets. When provided on rolls, the width of the tape may be from about 0.5 to about 20 cm and may be provided on paper rolls or plastic rolls having an internal diameter of from about 2 to about 10 cm. When provided as adhesive sheets, the sheets may be die-cut to facilitate application to curved and/or non-planar surfaces. Adhesive sheets are normally provided with a release liner to facilitate stacking, transportation and handling.

Further embodiments and features of the invention will now be described with reference to the following examples, which are meant to be construed in a non-limiting sense.

Example 1 - Comparison of Paper Properties

Trials were conducted by a paper supplier to determine the extent to which PCW pulp could be incorporated into crepe paper without detrimental impact to the production process. It was experimentally determined that up to about 50 wt% PCW pulp, based on dry weight of paper, could be incorporated without detrimental impact on equipment performance. However, a PCW content of 30 wt% on a dry basis was selected in order to meet labeling requirements while at the same time minimizing the impact on volume tape manufacturing equipment and final product properties.

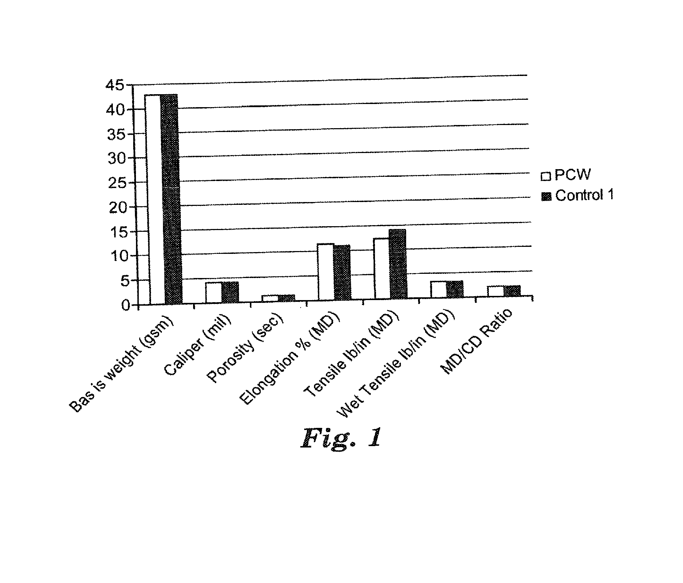

A crepe paper containing 30 wt% PCW pulp on a dry paper weight basis was obtained from the supplier and compared with a standard (non-PCW containing) crepe paper control (designated Control 1). The following quality control metrics were tested on the unsaturated paper, as supplied, according to the standard methods referenced in parentheses: basis weight (g/m2); caliper thickness (mil) (TAPPI T-411); porosity (s) (TAPPI T-460); MD elongation (%) (TAPPI T-494), MD tensile (lb/in) (TAPPI T-494), MD wet tensile (lb/in) (TAPPI T-456), MD/CD tensile ratio (TAPPI T-494). The results of these tests are reported in Fig. 1. The PCW containing paper had similar performance across all quality control metrics as the control paper.

Example 2 - Tape Properties

Based on the success of initial quality control testing on the as-supplied paper, a masking tape composition was made from the 30 wt% PCW paper on production equipment and subjected to standard tape tests. In order to enhance the environmentally friendly aspects of the product, only water-based saturants were used. The compositions of the tapes are provided in Table 1.

**Table 1: Composition of PCW containing tape and standard tape control**

| Category | PCW Lot A1 | PCW Lot A2 | Control A |
|---|---|---|---|
| Paper basis weight (g/m2) | 45 | 45 | 45 |
| Saturant type | SBR latex | SBR latex | SBR latex |
| Saturant loading (wt%) | 46.4 | 40 | 46.4 |
| Adhesive coating (g/m2) | 35 | 35 | 35 |
| Barrier coating (g/m2) | 4 | 4 | 4 |
| Release coating (g/m2) | 2 | 2 | 2 |

Surprisingly, no significant issues were encountered during manufacturing in terms of machine speed, jamming, saturation or coating of the PCW paper; this is counter to previous experience concerning the impact of changes in the paper on the manufacturing process.

Saturant loading was calculated in the above table using the nominal paper weight (45 gsm) and the target saturant weight, according to the following formula:

$$Saturant\ loading\ (\%) = target\ saturant\ weight\ (gsm)\ /\ nominal\ paper\ weight\ (gsm)\ *\ 100$$

This calculation methodology was adopted to account for typical variability in the backing and the saturant weights and to reflect the methodology used by persons skilled in the art when conducting such tests.

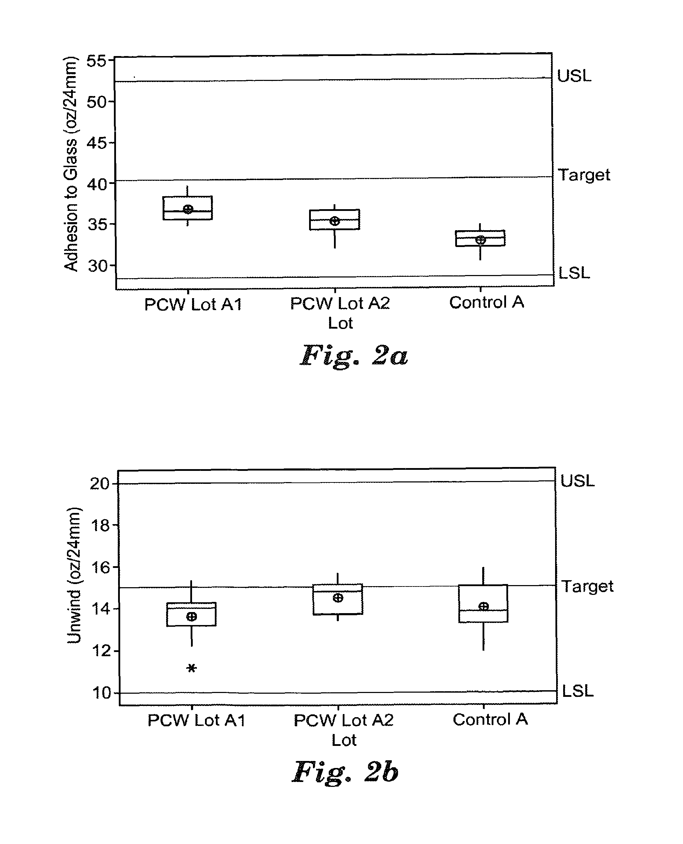

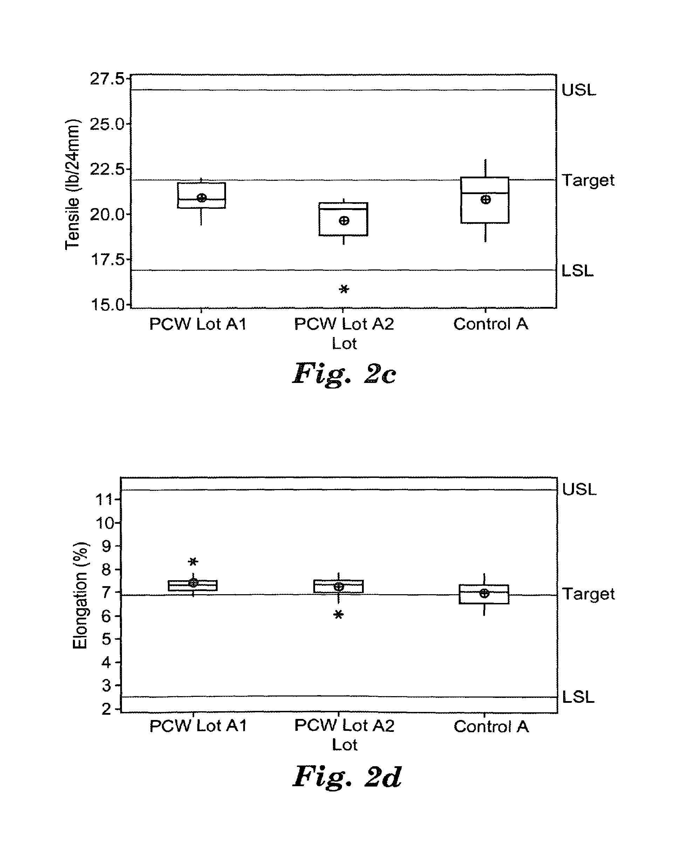

A tape composition made using conventional paper (designated Control A) was tested alongside the PCW containing tape. The results of standard tests on the finished tape compositions are reported in Figs. 2a to 2d. The target and upper and lower spec limits are shown by horizontal lines on each figure. Adhesion values for the tape were determined after the tape was applied to a cleaned glass substrate and the sample rolled down. The sample was peeled at a 180° angle at 90 inches per minute (ipm). Roll unwind values were determined by measuring the force to unwind the roll of tape at a speed of 90 ipm.

The inclusion of PCW into the tape composition had an impact on all tested variables when compared with control, but for the particular PCW content and saturant loading of the tested tapes, the impact did not exceed spec limits.

Example 3 - Slivering Performance

After successfully completing these preliminary tests, samples of tapes having 30 wt% PCW backing made with varying levels of saturant loading were compared in terms of slivering performance versus a control tape made with conventional backing paper (designated Control B). An acrylic latex saturant was used. It was hypothesized that saturant loading would have an impact on slivering performance and, accordingly, a wider range of saturant levels was tested than in previous tests. The properties of the tested samples are reported in Table 2. Saturant levels are reported on a dry paper weight basis.

**Table 2: PCW containing and control tapes used for slivering tests**

| | PCW Lot B1 | PCW Lot B2 | PCW Lot B3 | Control B |
|---|---|---|---|---|
| Saturant Loading (wt%) | 46.4 | 40 | 35.6 | 46.4 |

The tapes were tested according to an internal 3M test method referred to as "Wallboard Testing". The test simulates a practical application of the masking tape to a wall board. The test procedure requires the preparation of wallboard with a primer. The primer is allowed to dry and then a white base coat is applied and allowed to dry. The masking tape sample is then applied in a controlled fashion to the base coating. A darker paint is then applied over the masking tape and base paint. This is allowed to dry. Small sections of the masking tapes are pulled at fixed intervals - 4 hours, 8 hours, 24 hours and 72 hours. Adhesion measurements and visual observations are made such as paint line quality, tearing of the wallboard and any edge tearing of the masking tape made. Typically, four different combinations of paints are used for this evaluation.

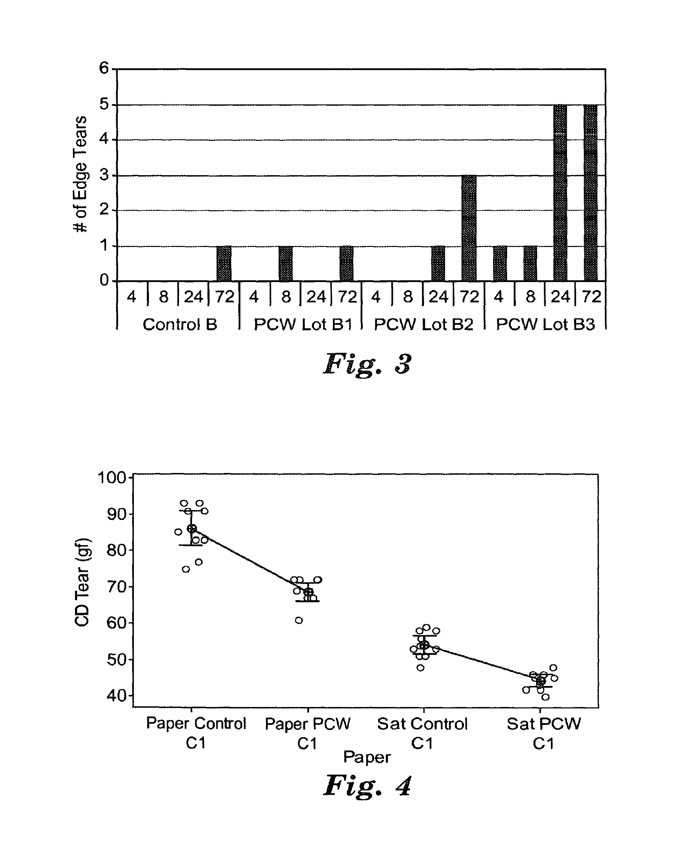

Significant differences between the four samples tested were noted with a specific semi-gloss latex paint (Sunproof Exterior™ from Pittsburgh Paints) with respect to incidence of edge tears. Edge tears are commonly referred to by persons skilled in the art as "slivering". These results are reported in Fig. 3.

Referring to Fig. 3, it can be seen that the number of edge tears decreased significantly with increasing saturation level. The Lot 3 samples showed unacceptably high levels of edge tear at any time value greater than 8 hours. The Lot 2 samples, having at least 40 wt% saturant loading, exhibited significantly reduced incidence of edge tear as compared with Lot 3. At 24 hours, the incidence of a single edge tear is considered likely to be acceptable to a consumer. However, the Lot 2 samples still had a higher incidence of edge tear after 72 hours than Lot 1, which was comparable to the control samples. It is felt that one incidence of edge tear after 72 hours is the preferred performance standard and this was achieved in the 30 wt% PCW containing samples at a saturant loading of at least 46 wt% (rounded down from 46.4 wt%).

Example 4 - CD Tear

Based on the results seen during the wallboard testing, additional testing was conducted to determine the CD tear values of saturated papers corresponding to the Lot B1 and Control B samples described in Table 2, in comparison with their unsaturated equivalents. CD tear is known to correlate with slivering performance and is measurable using standard TAPPI methods.

As used herein, the term "CD tear" refers to the mean average result of cross directional tear tests as measured with an Elmendorf Tear Tester in accordance with TAPPI Method T414. TAPPI Test Method T496 (specimen preparation for cross directional internal tearing resistance for paper, paperboard and related materials) was used for preparation of the raw paper samples.

The CD tear results are summarized in Table 3 and Fig. 4.

**Table 3: Summary of CD Tear Results**

| Sample | PCW Content (wt % dry weight) | Saturant Loading (wt%) | Tear (gf) | ΔTear (gf) |
|---|---|---|---|---|
| Raw Control Paper | 0 | N/A | 86.2 | 17.6 |
| Raw PCW Paper | 30 | N/A | 68.6 | |
| Saturated Control | 0 | 46.4 | 54.1 | 9.8 |
| Saturated PCW | 30 | 46.4 | 44.3 | |

The tear results show that the difference in mean CD Tear between the control and PCW containing samples decreased from 17.6 gf before saturation to 9.8 gf after saturation. This was a statistically significant decrease. The decreased difference in CD Tear appears to correlate with the observed decreased likelihood of slivering for the PCW containing samples at the selected saturant loading. It can be determined from the above that a CD tear of at least 40 gf is required for acceptable slivering performance in PCW containing samples, preferably at least 44 gf (rounded down).

Having described preferred embodiments of the invention, it will be understood by persons skilled in the art that certain variants and equivalents can be substituted for elements described herein without departing from the way in which the invention works. It is intended by the inventor that all sub-combinations of features described herein be included in the scope of the claimed invention, even if not explicitly claimed, and that features described in connection with certain embodiments may be utilized in conjunction with other embodiments.

**Claims**

1.  A masking tape composition comprising:

    a. a crepe paper comprising post-consumer waste (PCW) pulp in an amount of at least about 30 wt% based on the dry weight of the paper;
    b. a polymer saturant suitable for use in masking tapes absorbed into the paper to form a saturated paper having a dry saturant loading amount of at least 40 wt% based on the dry weight of the paper, the saturated paper having a cross directional (CD) tear value of at least 40 gf;
    c. an adhesive on a first side of the saturated paper; and,
    d. a release agent on a second side of the saturated paper opposite the first side.

2.  The tape according to claim 1, wherein the paper comprises PCW pulp in an amount of up to about 50 wt% based on the weight of the paper.

3.  The tape according to claims 1 or 2, wherein the saturant is absorbed into the paper at a dry saturant loading amount of at least 46 wt% based on the weight of the dry paper.

4. The tape according to claims 1 or 2, wherein the saturant is absorbed into the paper at a dry saturant loading amount of from 40 to 60 wt% based on the weight of the dry paper.

5. The tape according to claim 4, wherein the saturant is absorbed into the paper at a dry saturant loading amount of from 46 to 52 wt% based on the weight of the dry paper.

6. The tape according to any one of claims 1 to 5, wherein the saturant comprises a latex rubber.

7. The tape according to any one of claims 1 to 6, wherein the tape has a cross directional tear value of at least 44 gf.

8. The tape according to any one of claims 1 to 7, wherein the crepe paper has a basis weight of from 37 to 55 g/m2.

9. A masking tape composition comprising:

   a. a crepe paper comprising post-consumer waste (PCW) pulp in an amount of from about 30 to about 50 wt% based on the dry weight of the paper;
   b. a polymer saturant absorbed into the paper to form a saturated paper having a dry saturant loading amount of from 40 to 60 wt% based on the dry weight of the paper;
   c. an adhesive on a first side of the saturated paper; and,
   d. a release agent on a second side of the saturated paper opposite the first side.

10. The tape according to claim 9, wherein the tape has a cross directional tear value of at least 40 gf.

11. The tape according to claim 9, wherein the tape has a cross directional tear value of at least 44 gf.

12. The tape according to any one of claims 9 to 11, wherein the saturant is absorbed into the paper at a dry saturant loading amount of from 46 to 52 wt% based on the weight of the dry paper.

13. The tape according to any one of claims 9 to 12, wherein the saturant comprises a latex rubber.

14. The tape according to claim 13, wherein the saturant comprises a latex SBR rubber.

15. The tape according to any one of claims 9 to 14, wherein the crepe paper has a basis weight of from 37 to 55 g/m2.

16. A method of masking a workpiece surface to facilitate painting a first area of the surface comprising applying a masking tape composition to a second area of the surface, wherein the masking tape composition comprises:

   a. a crepe paper backing comprising post-consumer waste (PCW) pulp in an amount of about 30 to about 50 wt% based on the dry weight of the paper;
   b. an polymer saturant absorbed into the paper to form a saturated paper having a dry saturant loading amount of from 40 to 60 wt% based on the dry weight of the paper;
   c. an adhesive on a first side of the saturated paper; and,
   d. a release agent on a second side of the saturated paper opposite the first side; wherein the method results in a reduced number of edge tears of the tape composition upon removal from the surface following painting as compared with an otherwise identical tape having a different dry saturant loading.

17. The method according to claim 16, wherein the tape has a cross directional tear value of at least 40 gf.

18. The method according to claim 16, wherein the tape has a cross directional tear value of at least 44 gf.

19. The method according to any one of claims 16 to 18, wherein the saturant is absorbed into the paper at a dry saturant loading amount of from 46 to 52 wt% based on the weight of the dry paper.

20. The method according to any one of claims 16 to 19, wherein the saturant comprises a latex rubber.

*Fig. 1*

Fig. 2a

Fig. 2b

**Fig. 2c**

**Fig. 2d**

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2214006 A, Ziegler

- US 2410078 A, Kellgren

**Non-patent literature cited in the description**

- Encyclopedia of Polymer Science and Engineering. Wiley-Interscience Publishers, 1988, vol. 13

- Encyclopedia of Polymer Science and Technology. Interscience Publishers, 1964, vol. 1